# EUROPEAN PATENT APPLICATION

(11) **EP 4 748 607 A1**
(43) Date of publication of application: **27.05.2026**
(21) Application number: 25216688.9
(22) Date of filing: 18.11.2025
(51) Int. Cl.: B60K 35/10, B60K 35/22

(54) **IN-VEHICLE SYSTEM AND INFORMATION PROCESSING APPARATUS**

(30) Priority: 25.11.2024 JP 2024204794
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

A display device (20) includes a touch panel (27), a first display unit (21) disposed in front of a steering wheel (4), a second display unit (22, 23) disposed on at least one side of the first display unit (21) in a vehicle width direction and also disposed on a rear side of a vehicle (1) with respect to the first display unit (21), and a third display unit (24, 25) with a curved surface connecting the first display unit (21) and the second display unit (22, 23) to each other, and an information processing apparatus (10) includes a controller (100) configured to execute: receiving (S101) a request input to the touch panel (27) to move content (201) displayed on one of the first and second display unit (22, 23)s to the other display unit; and outputting (S109), to the display device (20), information for moving the content (201) while deforming it when the content (201) is moved from the one display unit to the other display unit via the third display unit (24, 25).

## Description

### BACKGROUND

### Technical Field

The present disclosure relates to an in-vehicle system and an information processing apparatus.

### Description of the Related Art

There has been known a vehicle including a steering wheel, a center display unit provided in front of the steering wheel, and a side display unit provided on one side or each side of the center display unit in a vehicle width direction (for example, refer to Patent Literature 1).

### Citation List

### Patent Literature

Patent Literature 1: Japanese Patent No. 07306210

### SUMMARY

An object of the present disclosure is to provide a user interface for a vehicle that is less likely to give a sense of discomfort to a user.

One aspect of the present disclosure is directed to an in-vehicle system including a display device and an information processing apparatus configured to output information via the display device,
the display device including:
a touch panel;
a first display unit disposed in front of a steering wheel;
a second display unit disposed on at least one side in a vehicle width direction with respect to the first display unit, the second display unit being also disposed on a rear side of a vehicle with respect to the first display unit; and
a third display unit connecting the first display unit and the second display unit to each other and having a curved surface;
the information processing apparatus including a controller and a storage,
the controller being configured to execute:
   receiving a signal from the touch panel;
   determining, according to information stored in the storage, whether or not the signal received from the touch panel is a signal for moving content displayed on one of the first display unit and the second display unit to the other display unit via the third display unit;
   identifying a position of the content in a next frame according to the information stored in the storage;
   identifying a shape of the content to be changed corresponding to the position of the content according to the information stored in the storage, in response to determining that the signal is a signal for moving the content displayed on the one display unit to the other display unit via the third display unit;
   generating the next frame in which the shape of the content is displayed at the position of the content; and
   transmitting, to the display device, a command to display the next frame thus generated.

Another aspect of the present disclosure is directed to an in-vehicle system including a display device and an information processing apparatus configured to output information via the display device,
the display device including:
a touch panel;
a first display unit disposed in front of a steering wheel;
a second display unit disposed on at least one side in a vehicle width direction with respect to the first display unit, the second display unit being also disposed on a rear side of a vehicle with respect to the first display unit; and
a third display unit connecting the first display unit and the second display unit to each other and having a curved surface;
the information processing apparatus including a controller configured to execute:
   receiving a request to move content displayed on one of the first display and the second display to the other display, the request being input to the touch panel; and
   outputting, to the display device, information for moving the content while deforming it, when the content is moved from the one display unit to the other display unit via the third display unit in response to receiving the request, and when the content passes through the third display unit.

A further aspect of the present disclosure is directed to an information processing apparatus configured to output information via a display device,
the display device including:
a touch panel;
a first display unit disposed in front of a steering wheel;
a second display unit disposed on at least one side in a vehicle width direction with respect to the first display unit, the second display unit being also disposed on a rear side of a vehicle with respect to the first display unit; and
a third display unit connecting the first display unit and the second display unit to each other and having a curved surface;
the information processing apparatus including a controller configured to execute:
   receiving a request to move content displayed on one of the first display and the second display to the other display, the request being input to the touch panel; and
   outputting, to the display device, information for moving the content while deforming it, when the content is moved from the one display unit to the other display unit via the third display unit in response to receiving the request, and when the content passes through the third display unit.

A still further aspect of the present disclosure is directed to a vehicle equipped with the above-mentioned in-vehicle system, an information processing method to be executed by the information processing apparatus, a program for causing a computer to execute the information processing method, or a non-transitory computer readable storage medium storing the program.

According to the present disclosure, it is possible to provide a user interface for a vehicle that is less likely to give a sense of discomfort to a user.

### BRIEF DESCRIPTION OF THE DRAWINGS

FIG. 1 is a view illustrating a passenger compartment of a vehicle;
FIG. 2 is a view illustrating a schematic configuration of a display device and its periphery;
FIG. 3 is a view illustrating an example of a screen displayed on each of a meter display, an inner display, and an inner connection display;
FIG. 4 is a view illustrating an example of a mode of deformation of content when the content is reduced and enlarged in the inner connection display;
FIG. 5 is a diagram schematically illustrating an example of a hardware configuration of the vehicle;
FIG. 6 is a diagram illustrating a functional configuration of an ECU;
FIG. 7 is a flowchart of processing in the ECU when content is moved according to a first embodiment;
FIG. 8 is a view illustrating an example of a mode of deformation of content when the content moves on an inner connection display according to a second embodiment;
FIG. 9 is a view illustrating an example of a mode of deformation of content when the content moves on an inner connection display according to a third embodiment; and
FIG. 10 is a view illustrating an example of a mode of deformation of content when the content moves on an inner connection display according to a fourth embodiment.

### DESCRIPTION OF THE EMBODIMENTS

In recent years, as automobiles have become more sophisticated, displays for providing information have become larger and larger. For example, it is conceivable to arrange a large display with a curved surface in order to direct the display toward the driver. In addition, in order to utilize a large-sized display, it is also conceivable to configure the content displayed on the display to be movable. However, when the content passes through the curved surface during the movement of the content, the content may be distorted, which may give the user an uncomfortable feeling.

On the other hand, an in-vehicle system according to one aspect of the present disclosure includes a display device and an information processing apparatus configured to output information via the display device, wherein the display device includes: a touch panel; a first display unit disposed in front of a steering wheel; a second display unit disposed on at least one side in a vehicle width direction with respect to the first display unit, the second display unit being also disposed on a rear side of a vehicle with respect to the first display unit; and a third display unit with a curved surface connecting the first display unit and the second display unit to each other; and wherein the information processing apparatus includes a controller configured to execute: receiving a request to move content displayed on one of the first display unit and the second display unit to the other display unit, the request being input to the touch panel; and outputting, to the display device, information for moving the content while deforming it, when the content is moved from the one display unit to the other display unit via the third display unit in response to receiving the request, and when the content passes through the third display unit.

The display device includes the first display unit, the second display unit, and the third display unit. The first display unit is a display disposed in front of the steering wheel and in front of the driver. The second display unit is disposed on a vehicle right side or a vehicle left side of the first display unit, and is also disposed on a vehicle rear side of the first display unit. The second display unit may be a pair of displays disposed at positions on both sides of the steering wheel. In addition, the second display unit has a configuration in which a touch operation can be performed by a touch panel. Note that the first display unit and the third display unit may also have a configuration in which a touch operation by a touch panel is possible.

The second display unit is disposed at a position closer to the driver than the first display unit. By providing the second display unit at such a position, the touch panel can be disposed in the vicinity of a portion of the steering wheel gripped by the driver. That is, at the time of operation, it is possible to minimize the time during which the driver has to release his/her hands from the steering wheel. Note that the steering wheel does not necessarily have to be circular as long as it has a grip portion and is rotated to perform a steering operation.

The third display unit is disposed so as to connect the first display unit and the second display unit to each other. The third display unit has curved surfaces. These curved surfaces may be formed in a connection portion between the first display unit and the third display unit and a connection portion between the second display unit and the third display unit, respectively. In addition, the third display unit as a whole may be formed of a curved surface. Also, the first display unit and the second display unit each may have a curved surface. In this case, the curvatures of the respective display units may be determined so that the curvature of the curved surface related to the third display unit is the largest. The first display unit, the second display unit, and the third display unit may be integrally formed.

The first display unit, the second display unit, and the third display unit display content. The content includes content related to the control of the vehicle or content related to the convenience of occupants of the vehicle. The content related to the convenience of the occupants of the vehicle may include content for providing entertainment to the occupants of the vehicle, content related to the comfort of the occupants, or the like. The content related to the comfort or convenience of the occupants includes, for example, an interface for operating an audio, a navigation system, an air conditioner, a telephone, a clock, a voice assistant, or the like, and presentation of information related to the operation status of these equipment. In addition, the content related to the control of the vehicle may include information related to the traveling of the vehicle. The content related to the control of the vehicle includes, for example, interfaces for operating headlights, wipers, side mirrors, ADAS (Advanced Driver Assistance System), drive mode, vehicle height, the position of the steering wheel, the positions of seats, etc., as well as the presentation of information about the operation status of these equipment.

The controller performs animation display in such a manner that the content moves from the first display unit to the second display unit via the third display unit. Also, the controller performs animation display so as to move the content from the second display unit to the first display unit via the third display unit. The animation display is performed in response to an input from the user. The input from the user is made to the touch panel. For example, when a flick or a swipe is made on the displayed content, a signal is transmitted from the touch panel to the controller. Accordingly, the controller receives a request to move the content in the direction of the flick or swipe.

Upon receiving the request to move the content, the controller generates information for deforming the content in such a manner that the content moves while being deformed when the content passes through the third display unit. Then, the information thus generated is transmitted to the display device. In this way, when the content passes through the third display unit, the content is displayed in an animation in such a manner that the content is deformed. Thus, by actively deforming the content, it is possible to reduce the sense of discomfort given to the user when the content passes through the curved surface.

Hereinafter, embodiments of the present disclosure will be described based on the accompanying drawings. The configurations of the following embodiments are examples, and the present disclosure is not limited to the configurations of the embodiments. In addition, the following embodiments can be combined with one another as long as such combinations are possible and appropriate.

### <First Embodiment>

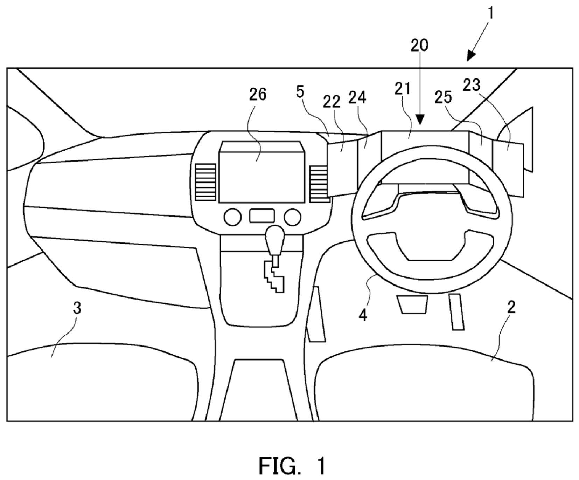

FIG. 1 is a view illustrating a passenger compartment of a vehicle 1. A driver's seat 2 and a passenger seat 3 are provided in the passenger compartment of the vehicle 1. Note that the vehicle 1 of the present embodiment is a right-hand drive vehicle, and a driver's seat 2 is provided on the right side in the traveling direction of the vehicle 1. A steering wheel 4 is disposed in front of the driver's seat 2. The steering wheel 4 may have a circular shape or a U-shape (so-called deformed steering wheel). The steering wheel 4 is connected to a steering device of the vehicle 1 via a steering column. The steering column is covered by a column cover.

The passenger seat 3 is provided on the left side of the driver's seat 2, and a center display 26 is disposed on the front side of the vehicle at an intermediate position between the driver's seat 2 and the passenger seat 3. The center display 26 displays, for example, auxiliary information such as car navigation, or contents related to entertainment such as audio and television.

A display device 20 is provided on the vehicle front side of the steering wheel 4. The display device 20 includes a meter display 21 located in front of the driver's seat 2, an inner display 22 located behind the meter display 21 and inside the vehicle 1, an outer display 23 located behind the meter display 21 and outside the vehicle 1, an inner connection display 24 connecting the meter display 21 and the inner display 22 to each other, and an outer connection display 25 connecting the meter display 21 and the outer display 23 to each other. Note that the meter display 21 is an example of a first display unit, the inner display 22 and the outer display 23 are examples of a second display unit, and the inner connection display 24 and the outer connection display 25 are examples of a third display unit.

Note that the term "outside the vehicle 1" refers to a side close to the outside of the vehicle 1 when viewed from the driver's seat 2, and refers to the door side of the driver's seat 2. Also, the term "inside the vehicle 1" refers to the side of the passenger seat 3 as viewed from the driver's seat 2, and refers to the door side of the passenger seat 3. For example, in the vehicle 1 in which the steering wheel is provided on the right side of the vehicle 1, the term "outside the vehicle 1" refers to the right side of the vehicle 1, and the term "inside the vehicle 1" refers to the left side of the vehicle 1. In addition, for example, in the vehicle 1 in which the steering wheel 4 is provided on the left side of the vehicle 1, the term "outside the vehicle 1" indicates the left side of the vehicle 1, and the term "inside the vehicle 1" indicates the right side of the vehicle 1. In the vehicle 1 in which the steering wheel is disposed at the center of the passenger compartment, for example, the terms "outside the vehicle 1 and "inside the vehicle 1" may be determined in an optional manner.

The meter display 21, the inner display 22, the outer display 23, the inner connection display 24, and the outer connection display 25 are all displays each having a touch panel. Note that the touch panel may be included in at least the inner display 22 and the outer display 23. As the touch panel, there can be adopted, for example, a pressure-sensitive touch panel, which detects the pressure with which the user presses the panel, and a capacitive touch panel, which detects a change in capacitance when the user presses the panel. The display is, for example, an LCD (Liquid Crystal Display) or EL (Electroluminescence) panel. Note that in the following, when the user touches the screen, it means that the user touches the touch panel. The meter display 21, the inner display 22, the outer display 23, the inner connection display 24, and the outer connection display 25 may be formed by deforming one touch screen or may be formed by combining individual touch screens with each other.

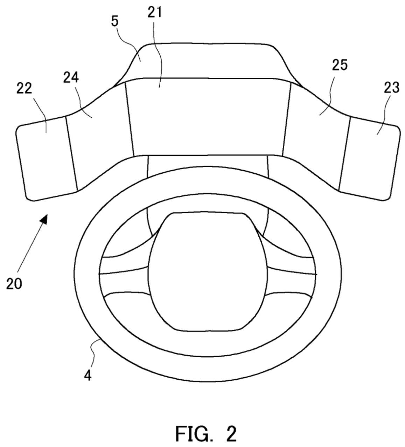

FIG. 2 is a view illustrating a schematic configuration of the display device 20 and its periphery. The display device 20 is fixed to the instrument panel 5. The meter display 21 is a horizontally long display, and the inner display 22, the outer display 23, the inner connection display 24, and the outer connection display 25 are vertically long displays. The meter display 21 is disposed so that the screen faces the rear of the vehicle, and is disposed parallel to the left-right direction (vehicle width direction) of the vehicle 1. Note that the meter display 21 may be disposed at a slight incline so as to face slightly upward.

The inner connection display 24 is connected to an end portion of the meter display 21 on the vehicle inner side. The inner connection display 24 is a display that extends from an end portion of the meter display 21 on the inner side of the vehicle toward the rear of the vehicle 1 and toward the inside of the vehicle 1. The inner display 22 is connected to an end portion of the inner connection display 24 on the vehicle inner side. The inner display 22 is a display that extends from the end portion of the inner connection display 24 on the vehicle inner side toward the rear of the vehicle 1 and toward the inside of the vehicle 1. Note that the angle of the inner display 22 with respect to the meter display 21 is smaller than the angle of the inner connection display 24 with respect to the meter display 21. The inner connection display 24 is curvedly connected to the meter display 21 and the inner display 22. The inner connection display 24 has a curved surface that is concave toward the front side of the vehicle at its connection portion with the meter display 21, and has a curved surface that is convex toward the rear side of the vehicle at its connection portion with the inner display 22. Note that the meter display 21 and the inner display 22 each may have a curved surface.

The outer connection display 25 is connected to an end portion of the meter display 21 on the vehicle outer side. The outer connection display 25 is a display that extends from the end portion of the meter display 21 on the outer side of the vehicle toward the rear of the vehicle 1 and the outside of the vehicle 1. The outer display 23 is connected to an end portion of the outer connection display 25 on the vehicle outer side. The outer display 23 is a display that extends from the end portion of the outer connection display 25 on the vehicle outer side toward the rear of the vehicle 1 and the outside of the vehicle 1. Note that the angle of the outer display 23 with respect to the meter display 21 is smaller than the angle of the outer connection display 25 with respect to the meter display 21. The outer connection display 25 is curvedly connected to the meter display 21 and the outer display 23. The outer connection display 25 has a curved surface that is concave toward the front side of the vehicle at its connection portion with the meter display 21, and has a curved surface that is convex toward the rear side of the vehicle at its connection portion with the outer display 23. Note that the meter display 21 and the outer display 23 each may have a curved surface.

As described above, the display device 20 extends from the upper portion of the steering column in the left-right direction (vehicle width direction), bends toward the steering wheel 4 in the middle, and further bends in such a manner that its angle with respect to the left-right direction of the steering wheel 4 becomes smaller. In this manner, the inner display 22 and the outer display 23 can be disposed in the vicinity of the grip portion of the steering wheel 4.

Further, the inner display 22 and the outer display 23 are angled with respect to the left-right direction of the steering wheel 4, and are each disposed so as to be inclined toward the steering wheel 4. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver.

The meter display 21 displays information necessary for traveling of the vehicle 1, such as the speed of the vehicle 1, the engine rotation speed (in the case where the vehicle 1 has an engine), the charge and discharge state (in the case where the vehicle 1 has a driving battery), the distance of travel, and the state of an ADAS.

The inner display 22 displays, for example, information related to the convenience of occupants of the vehicle 1 as content. The information related to the convenience of the occupants of the vehicle 1 includes information for providing entertainment to the occupants of the vehicle 1. The information related to the convenience of the occupants of the vehicle 1 may include information related to the comfort of the occupants. The information about the suitability and convenience of the occupants includes, for example, information about switches, buttons, etc., for operating audio, navigation device, air conditioner, telephone, clock, voice assistant, etc., and information about the operation status of these devices.

The outer display 23 displays, for example, information about the control of the vehicle 1 as content. The information about the control of the vehicle 1 includes information about the traveling of the vehicle 1. The information about the control of vehicle 1 includes, for example, information about switches, buttons, etc., for operating headlights, wipers, side mirrors, ADAS, drive mode, vehicle height, steering wheel position, and seat position, as well as information about the operation status of these devices.

Here, note that the information to be displayed on the inner display 22 and the outer display 23 is not limited to the above. The inner display 22 may display information about the control of the vehicle 1, and the outer display 23 may display information about the convenience of the occupants of the vehicle 1. In addition, information to be displayed on the inner display 22 and the outer display 23 can be determined in an optional manner.

The inner connection display 24 displays, for example, an image corresponding to content when the content is moved between the meter display 21 and the inner display 22. The outer connection display 25 displays an image corresponding to content when the content is moved between the meter display 21 and the outer display 23. Note that the inner connection display 24 and the outer connection display 25 may display some information or may not display anything except when the content is being moved.

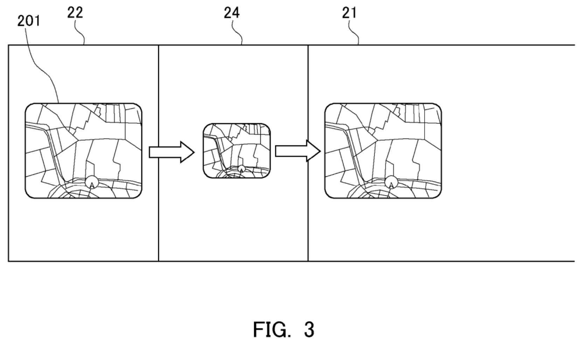

FIG. 3 is a view illustrating an example of a screen displayed on each of the meter display 21, the inner display 22, and the inner connection display 24. FIG. 3 shows the meter display 21, the inner display 22, and the inner connection display 24 on the same plane. In FIG. 3, an arrow indicates the moving direction of the content 201. Also, FIG. 3 illustrates a mode in which content 201 is located on each of the meter display 21, the inner display 22, and the inner connection display 24. Note that in the following, the movement of content from the inner display 22 to the meter display 21 will be described. The same can be applied to the movement of content from the meter display 21 to the inner display 22 and the movement of content between the meter display 21 and the outer display 23. The content 201 illustrated in FIG. 3 is the content related to a navigation device, and displays a map, an own vehicle position, and a route.

The content 201 can be moved from the inner display 22 to the meter display 21. For example, when the user swipes or flicks an image displayed on the inner display 22 in the direction of the meter display 21, animation display is performed so that content moves from the inner display 22 to the meter display 21 via the inner connection display 24. Then, when the content 201 passes through the inner connection display 24, animation display is performed in such a manner that the content 201 is deformed. In the example shown in FIG. 3, the content 201 is reduced and enlarged in the inner connection display 24.

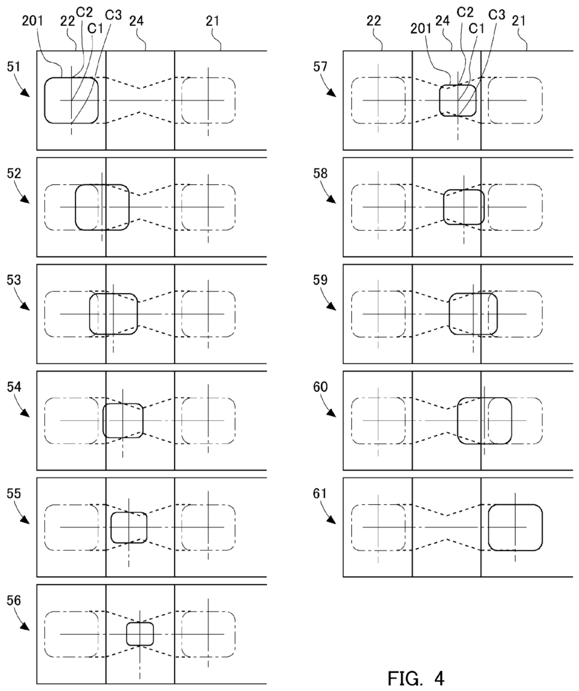

FIG. 4 is a view illustrating an example of a mode of deformation of the content 201 when the content 201 is reduced and enlarged in the inner connection display 24. FIG. 4 shows the meter display 21, the inner display 22, and the inner connection display 24 on the same plane. The content 201 is sequentially moved from reference numeral 51 to reference numeral 61. Reference numeral 51 indicates a state in which the content 201 is normally displayed on the inner display 22. C1 indicates the center of the content 201, C2 indicates the center of the upper side of the content 201, and C3 indicates the center of the lower side of the content 201. In addition, the loci of the center C2 of the upper side and the center C3 of the lower side of the content 201 are indicated by broken lines. Also, the size of the content 201 displayed on the inner display 22 before its movement is the same as the size of the content 201 displayed on the meter display 21 after its movement. Moreover, the center C1 of the content 201 moves in the horizontal direction.

As indicated by reference numeral 52, when the center C1 of the content 201 is located on the inner display 22, the content 201 moves in the direction of the meter display 21 while maintaining its size. The size of the portion of the content 201 that is included in the inner connection display 24 is also the same as in the case of reference numeral 51. From reference numeral 53 to reference numeral 56, the content 201 is gradually reduced. On the other hand, from reference numeral 56 to reference numeral 59, the content 201 is gradually enlarged.

As indicated by reference numerals 53 through 59, when the center C1 of the content 201 is located on the inner connection display 24, the content 201 is deformed according to the position of the center C1 of the content 201. This deformation is performed in such a manner that the content 201 changes in a similar shape. At reference numeral 56, the content 201 is positioned at the center of the inner connection display 24 in the horizontal direction, showing a state where the content 201 becomes the smallest. Note that the mode of deformation of the content 201 when the content passes through the inner connection display 24 is not limited to the reduction and enlargement of the content illustrated in FIGS. 3 and 4. For example, in a case where the size of the content displayed on the meter display 21 is larger than the size of the content displayed on the inner display 22, the size of the content may be gradually increased when the content is moved from the inner display 22 to the meter display 21.

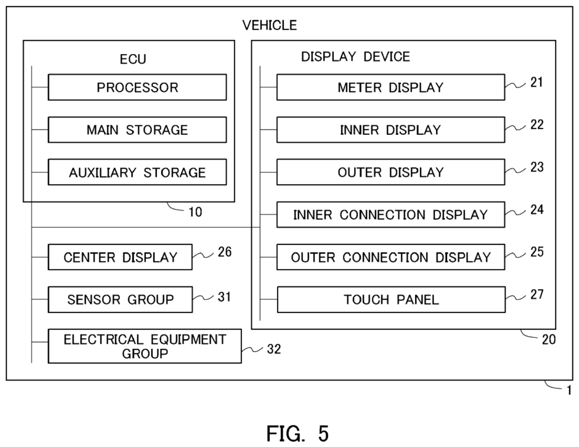

FIG. 5 is a diagram schematically illustrating an example of a hardware configuration of the vehicle 1. The vehicle 1 includes an ECU 10, the display device 20, the center display 26, a sensor group 31, and an electrical equipment group 32. The ECU 10 can be configured as a computer having a processor (CPU or the like), a main storage (RAM, ROM, or the like), and an auxiliary storage (EPROM, hard disk drive, removable medium, or the like). An operating system (OS), various programs, various tables, etc., are stored in the auxiliary storage, and by executing the programs stored therein, it is possible to realize each function (software module) that meets a predetermined purpose, as described later. However, some or all of the functions may be realized as a hardware module by a hardware circuit such as, for example, an ASIC, an FPGA or the like. The display device 20, the center display 26, the sensor group 31, and the electrical equipment group 32 are connected to the ECU 10. The ECU 10 is an example of an information processing apparatus.

The display device 20 includes the meter display 21, the inner display 22, the outer display 23, the inner connection display 24, the outer connection display 25, and a touch panel 27. The touch panel 27 is a unit for detecting touch operations performed on the meter display 21, the inner display 22, the outer display 23, the inner connection display 24, and the outer connection display 25. The meter display 21, the inner display 22, the outer display 23, the inner connection display 24, and the outer connection display 25 are each provided with the touch panel 27, which allows operation by touch. The meter display 21, the inner display 22, the outer display 23, the inner connection display 24, the outer connection display 25, and the touch panel 27 may be a modified form of a single touch screen.

The sensor group 31 is a set of a plurality of sensors for obtaining sensor data used in the traveling of the vehicle 1. The sensors may obtain physical quantities or may obtain image data or the like. The sensor group 31 includes, for example, a sensor that detects the state of the vehicle 1 and a sensor that detects the actions of the driver. The sensor group 31 includes, for example, a speed sensor, an acceleration sensor, an accelerator opening sensor that detects the position of an accelerator pedal, a brake sensor that detects the position of a brake pedal, a steering wheel angle sensor that detects the angle of the steering wheel, an engine rotation speed sensor that detects the rotation speed of the engine, a yaw rate sensor, a turn signal switch sensor (a sensor that detects the state of a turn signal switch), a shift position sensor, a sensor that detects position information (GPS sensor), a sensor that detects the temperature inside the vehicle, a sensor that detects the temperature outside the vehicle, and a radar that measures the distance to an object, etc.

The electrical equipment group 32 is a set of electrical equipment used in the vehicle 1. The electrical equipment group 32 includes, for example, an air conditioner, a navigation device, an audio device, a telephone, a wiper, a headlight, a side mirror, an electric seat, and a voice assistant.

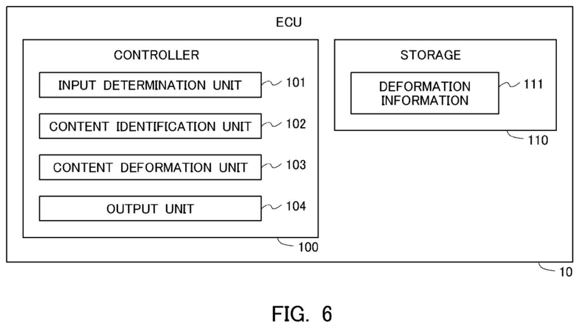

FIG. 6 is a diagram illustrating a functional configuration of the ECU. The ECU 10 includes a controller 100 and a storage 110 as its functional components. The controller 100 is a functional component that is provided by, for example, the processor executing various programs stored in the auxiliary storage. The controller 100 includes an input determination unit 101, a content identification unit 102, a content deformation unit 103, and an output unit 104. The storage 110 is a means for storing information, and is configured to include a main storage and an auxiliary storage.

The input determination unit 101 receives a signal from the touch panel 27 and determines an input operation performed by the user via the touch panel 27. The input determination unit 101 identifies a position touched by the user. When the user touches the touch panel 27 to perform a finger movement associated with a flick or a swipe, the input determination unit 101 determines that a flick or a swipe operation has been performed. Note that the input determination unit 101 may be capable of determining input operations such as a tap, a pinch, a double tap, a long tap, and a multi-tap, in addition to the flick and the swipe. The relationship between the user's finger movements and the user's input operations is stored in the storage 110. In addition, the input determination unit 101 may calculate the moving speed of the content 201 according to, for example, the direction and speed of the swipe operation. This calculation formula may be stored in the storage 110. Also, the relationship between the speed or acceleration of a finger and the moving speed of the content 201 may be stored in the storage 110. Then, the speed at which the content 201 moves on the inner connection display 24 and the outer connection display 25 may be adjusted according to this moving speed. Further, the moving speed of the content 201 may increase according to the speed or acceleration of the finger when the user swipes or flicks, for example, or may be a constant value.

The content identification unit 102 identifies the position of the content 201 that is moving. The position of the content 201 may be identified by the coordinates of the center point of the content 201, the coordinates of the center point of the upper side of the content 201, the coordinates of the center point of the lower side of the content 201, the coordinates of the four corners of the content 201, or the coordinates of one or more specific points of the content 201. The content identification unit 102 identifies the content 201 that the user is trying to move in response to an input operation by the user (e.g., the position of a finger touching the display unit). The content identification unit 102 calculates the position of the content 201 in the next frame based on the current position of the content 201, the moving speed of the content 201, and the frame rate.

The content deformation unit 103 deforms the content 201 according to the position of the moving content 201. For example, the relationship between the position of the center of the content 201 and the shape of the content 201 is stored in the storage 110 as deformation information 111.

The output unit 104 outputs a command to display the content 201 to the display device 20. The output unit 104 generates an image corresponding to the content 201 for each frame, generates a signal for displaying the image for each frame, and transmits the signal to the display device 20.

In addition, the output unit 104 performs animation display in such a manner that the content 201 moves in the direction in which the user has flicked or swiped. The output unit 104 generates an image for each frame and outputs it to the display device 20 . The animation display in the present embodiment is performed by continuously switching the frames (i.e., still images) to be displayed on the display device 20 at each predetermined display switching timing. At each display timing, the output unit 104 generates information about the next frame, which is the frame to be displayed next the currently displayed frame, by calculation. The information about the next frame includes information about the position (may be coordinates) of the content. The output unit 104 performs the animation display by switching to the next frame at each display switching timing.

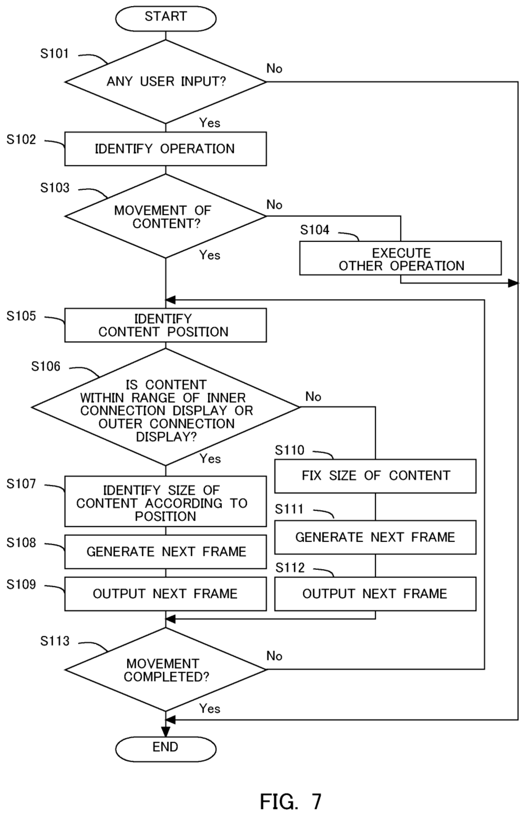

Next, the processing in the ECU 10 when the content 201 is moved will be described. FIG. 7 is a flowchart of the processing in the ECU 10 when the content 201 is moved according to a first embodiment. The processing illustrated in FIG. 7 is executed in the ECU 10 at each predetermined time interval.

In step S101, the input determination unit 101 determines whether or not there is an input from the user on the touch panel 27. For example, upon detecting, based on a signal from the touch panel 27, that the user has touched the screen, the input determination unit 101 determines that an input has been made by the user. If the input determination unit 101 makes an affirmative determination in step S101, the processing proceeds to step S102, but if the input determination unit 101 makes a negative determination, this routine ends.

In step S102, the input determination unit 101 identifies what kind of operation the input from the user is. For example, the input determination unit 101 identifies whether the input from the user is a flick, swipe, tap, pinch, double-tap, long-tap, or multi-tap. Note that the storage 110 stores information about the position on the screen where the user is touching the screen, the direction in which the finger is moving on the screen, the speed or acceleration of the finger moving on the screen, etc., corresponding to each operation. The input determination unit 101 determines, based on the input from the user to the touch panel 27 and the information stored in the storage 110, which operation the input from the user corresponds to.

In step S103, the input determination unit 101 determines whether or not the input from the user is a flick or swipe to move the content 201. That is, the input determination unit 101 determines whether or not there is a request to move the content 201. If the input determination unit 101 makes an affirmative determination in step S103, the processing proceeds to step S105, but if the input determination unit 101 makes a negative determination, the processing proceeds to step S104. In step S104, the controller 100 executes a process corresponding to an operation other than a flick or a swipe.

In step S105, the content identification unit 102 identifies the position of the content 201 in the next frame, which is the next frame to be displayed. The content identification unit 102 calculates the position of the content 201 in the next frame, based on the current position of the content 201, the moving speed of the content 201, and the frame rate. Note that, for example, in step S109 or step S112 described later, the output unit 104 may store the current position of the content 201 in the storage 110. Then, the content identification unit 102 may read the current position of the content 201 from the storage 110. Also, the position of the content 201 may be the position of the center of the content 201.

In step S106, the content identification unit 102 determines whether or not the position of the content 201 identified by the content identification unit 102 in step S105 is within the range of the inner connection display 24 or the outer connection display 25. The range of the inner connection display 24 or the outer connection display 25 is stored in the storage 110. The content identification unit 102 compares the position of the content 201 identified in step S105 with the range of the inner connection display 24 or the outer connection display 25 stored in the storage 110 to determine whether or not the position of the content 201 is within the range of the inner connection display 24 or the outer connection display 25. If the content identification unit 102 makes an affirmative determination in step S106, the processing proceeds to step S107, but if the content identification unit 102 makes a negative determination, the processing proceeds to step S110.

In step S107, the content deformation unit 103 identifies the size of the content 201 according to the position of the content 201 identified in step S105. The size of the content 201 corresponding to the position of the content 201 is stored in the storage 110. The content deformation unit 103 identifies the size of the content 201 in the next frame according to the position of the content 201 and the deformation information 111 stored in the storage 110. Then, the content deformation unit 103 deforms (enlarges or reduces) the content 201 according to the size of the content 201. At this time, a known technique for enlarging or reducing an image can be used. For example, the content deformation unit 103 may reduce the content 201 by thinning out pixels at a predetermined ratio, or may enlarge the content 201 by duplicating pixels at a predetermined ratio.

In step S108, the output unit 104 generates the next frame. The output unit 104 generates the next frame in such a manner that the content 201 of the size calculated in step S107 is displayed at the position of the content 201 identified in step S105. Note that, for the content that is not moving, the output unit 104 also generates an image corresponding to the point in time at which the next frame is displayed, and generates the next frame so as to display the image in the corresponding display area. In addition, the output unit 104 may generate the next frame so that other content is displayed on the inner display 22 or the outer display 23 from which the content 201 was moved, or may generate the next frame so that nothing is displayed at the place where the content 201 was originally present.

In step S109, the output unit 104 outputs information about the next frame to the display device 20. This information may include a command to display the next frame on the display device 20. As a result, the next frame is displayed on the inner connection display 24 or the outer connection display 25. That is, the output unit 104 automatically outputs an image for moving the content 201 frame by frame in real time. In this way, the output unit 104 moves the content 201 on the inner connection display 24 or the outer connection display 25 while deforming the content 201. The output unit 104 changes the size of the content 201 for each frame, thereby enabling continuous animation display.

Also, in step S110, the content deformation unit 103 fixes the size of the content 201. At this time, the content deformation unit 103 identifies the size of the content 201 to be displayed on the meter display 21, the inner display 22, or the outer display 23, and fixes it to this size. The relationship between the position of the content 201 and the size of the content 201 is stored in the storage 110. The size of the content 201 stored in the storage 110 may be different or the same for each of the meter display 21, the inner display 22, and the outer display 23.

In step S111, the output unit 104 generates the next frame. The output unit 104 generates the next frame in such a manner that the content 201 of the size fixed in step S110 is displayed at the position of the content 201 identified in step S105.

In step S112, the output unit 104 outputs information about the next frame to the display device 20. This information may include a command to display the next frame on the display device 20. In this manner, the output unit 104 moves the content 201 on the meter display 21, the inner display 22, or the outer display 23 without deforming the content 201. In addition, the output unit 104 moves the content 201 for each frame, thereby enabling continuous animation display.

Then, in step S113, the output unit 104 determines whether or not the movement of the content 201 is completed. The output unit 104 determines whether or not the movement of the content 201 is completed, by determining whether or not the position of the content 201 in the next frame identified in step S105 is the position at the time of the completion of the movement. The position of the content 201 at the time of the completion of the movement is stored in the storage 110. If the output unit 104 makes an affirmative determination in step S113, this routine ends, and if the output unit 104 makes a negative determination, the processing returns to step S105.

Here, note that in the above description, when the center of the content 201 is positioned on the inner connection display 24, the content 201 is reduced or enlarged, but the present invention is not limited to this, and for example, when at least a part of the content 201 is positioned on the inner connection display 24, the content 201 may be reduced or enlarged. At this time, when the right end portion of the content 201 enters the inner connection display 24 from the inner display 22, the entire content 201 may start to be reduced. Also, when the left end portion of the content 201 enters the meter display 21 from the inner connection display 24, the enlargement of the content 201 may be ended.

In addition, for example, when the entire content 201 is positioned on the inner connection display 24, the content 201 may be reduced or enlarged. At this time, when the left end portion of the content 201 enters the inner connection display 24 from the inner display 22, the entire content 201 may start to be reduced. Also, when the right end portion of the content 201 enters the meter display 21 from the inner connection display 24, the enlargement of the content 201 may be ended.

Further, in the above description, when the content 201 moves from the inner display 22 to the meter display 21, the content 201 is reduced and then enlarged, but the present invention is not limited thereto, and the content deformation unit 103 may enlarge and then reduce the content 201. In addition, the reduction and enlargement may be repeated a plurality of times.

As described above, according to the present embodiment, the content 201 is actively deformed when the content 201 passes through a location where the user may feel a sense of discomfort, i.e., a curved portion, thereby making it possible to prevent the user from feeling a sense of discomfort.

### <Second Embodiment>

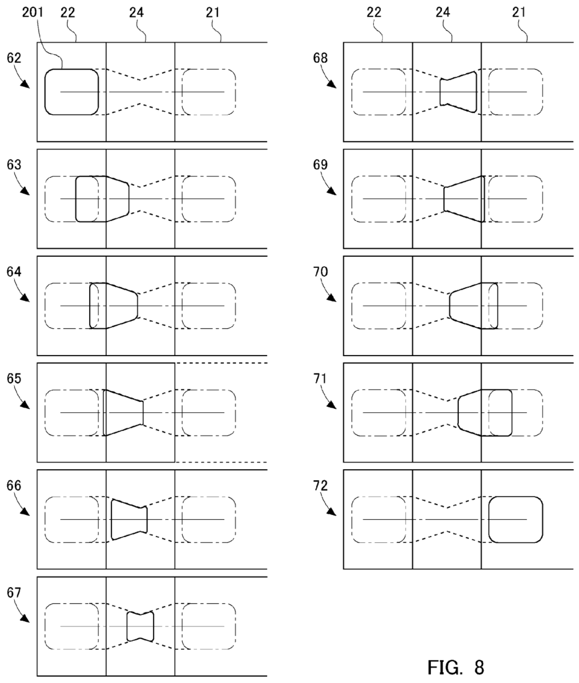

In a second embodiment, the mode of deformation is different from that in the first embodiment. FIG. 8 is a view illustrating an example of the mode of deformation of the content 201 when the content 201 moves on the inner connection display 24 according to the second embodiment. FIG. 8 illustrates the meter display 21, the inner display 22, and the inner connection display 24 on the same plane. The content 201 is sequentially moved from reference numeral 62 to reference numeral 72. Reference numeral 62 indicates a state in which the content 201 is normally displayed on the inner display 22. In FIG. 8, the loci of the upper and lower sides of the content 201 are indicated by broken lines. Also, the size of the content 201 displayed on the inner display 22 before its movement is the same as the size of the content 201 displayed on the meter display 21 after its movement. In addition, the center of the content 201 moves in the horizontal direction.

As indicated by reference numeral 63, even when the center of the content 201 is positioned on the inner display 22, a portion of the content 201 that enters the inner connection display 24 is reduced. Accordingly, the content 201 is distorted. In addition, the content 201 in its portion that has entered the inner connection display 24 is gradually reduced in size so that the reduction ratio thereof becomes larger on the side closer to the center of the inner connection display 24.

At reference numeral 64, the right end portion of the content 201 reaches the center of the inner connection display 24. In this case, too, a part of the content 201 located on the inner display 22 is not reduced. Further, at reference numeral 65, the right end portion of the content 201 is positioned to the right of the center of the inner connection display 24. Then, on the side of the meter display 21 rather than the center of the inner display 22, the content 201 is gradually enlarged in such a manner that the closer the side is to the meter display 21, i.e., the farther away from the center of the inner connection display 24, the larger the enlargement ratio is.

From reference numeral 66 to reference numeral 68, the entire content 201 is positioned on the inner connection display 24. At this time, the content 201 is deformed in such a manner that it becomes larger as it approaches the inner display 22 side and the meter display 21 side from the center of the inner connection display 24.

From reference numeral 69 to reference numeral 71, the right end portion of the content 201 is located on the meter display 21. A part of the content 201 located on the meter display 21 is displayed to be its original size. Then, at reference numeral 72, the movement of the content 201 is completed.

Also in the second embodiment, the content deformation unit 103 may deform the content 201 according to the position of the center of the content 201, for example. The relationship between the position of the center of the content 201 and the shape of the content 201 is stored in the storage 110 as deformation information 111.

In addition, in the second embodiment, in step S106 of the routine illustrated in FIG. 7, the content identification unit 102 determines whether or not at least a part of the content 201 is located within the range of the inner connection display 24 or the outer connection display 25. Also, in step S107, the content deformation unit 103 identifies the shape of the content 201 according to the position of the content identified in step S105. The content deformation unit 103 identifies the shape of the content 201 in the next frame according to the position of the center of the content 201 and the deformation information 111. Then, the content deformation unit 103 deforms the content 201 according to the identified shape of the content 201. At this time, a known technique for deforming an image can be used.

Note that in the above description, the content 201 is first reduced and then enlarged when it is moved from the inner display 22 to the meter display 21, but the present invention is not limited to this, and the content 201 may first be enlarged and then reduced. In addition, the content 201 may be reduced and enlarged a plurality of times.

As described above, according to the present embodiment, too, the content 201 is actively deformed when the content 201 passes through a location where the user may feel a sense of discomfort, i.e., a curved portion, thereby making it possible to prevent the user from feeling a sense of discomfort.

### <Third Embodiment>

In the first embodiment and the second embodiment, the sizes of the contents 201 displayed on the meter display 21 and the inner display 22 are the same. On the other hand, in a third embodiment, the content 201 is displayed larger on the meter display 21 than on the inner display 22. Here, the meter display 21 is larger than the inner display 22, so that more information can be displayed. Therefore, the controller 100 enlarges the content 201 displayed on the inner display 22 to display it on the meter display 21 on an enlarged scale, so that the content 201 can be easily viewed and more information can be displayed.

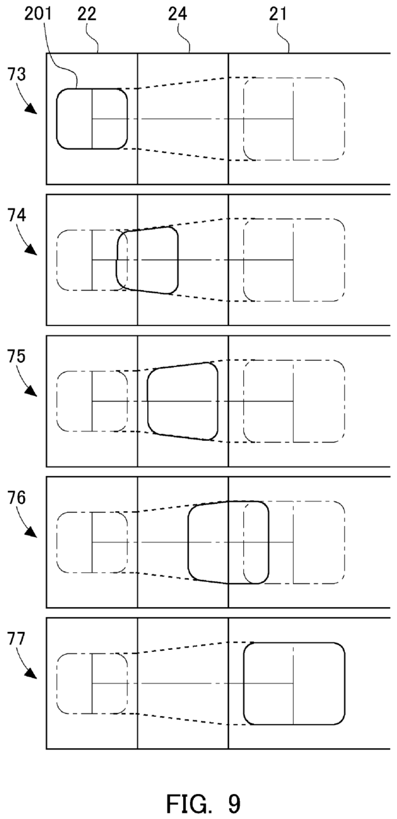

FIG. 9 is a view illustrating an example of the mode of deformation of the content 201 when the content 201 moves on the inner connection display 24 according to the third embodiment. FIG. 9 illustrates the meter display 21, the inner display 22, and the inner connection display 24 on the same plane. The content 201 is sequentially moved from reference numeral 73 to reference numeral 77. Reference numeral 73 indicates a state in which the content 201 is normally displayed on the inner display 22. In FIG. 9, the loci of the upper and lower sides of the content 201 are indicated by broken lines. Also, the size of the content 201 displayed on the meter display 21 after its movement is larger than the size of the content 201 displayed on the inner display 22 before its movement. In addition, the center of the content 201 moves in the horizontal direction.

As indicated by reference numeral 74, a portion of the content 201 that has entered the inner connection display 24 is enlarged. Accordingly, the content 201 is distorted. In addition, the content 201 in the portion that has entered the inner connection display 24 is gradually enlarged in such a manner that the enlargement ratio thereof becomes larger on the side closer to the meter display 21.

At reference numeral 75, the entire content 201 is located on the inner connection display 24. At this time, the content 201 is deformed in such a manner that it becomes larger as it approaches the meter display 21 side.

At reference numeral 76, the right end portion of the content 201 is positioned on the meter display 21. A part of the content 201 located on the meter display 21 is displayed to be its original size. Then, at reference numeral 77, the movement of the content 201 is completed.

Also in the third embodiment, the content deformation unit 103 may deform the content 201 according to the position of the center of the content 201, for example. The relationship between the position of the center of the content 201 and the shape of the content 201 is stored in the storage 110 as deformation information 111.

In addition, in the third embodiment, in step S106 of the routine illustrated in FIG. 7, the content identification unit 102 determines whether or not at least a part of the content 201 is located within the range of the inner connection display 24 or the outer connection display 25. Also, in step S107, the content deformation unit 103 identifies the shape of the content 201 according to the position of the content identified in step S105. The content deformation unit 103 identifies the shape of the content 201 in the next frame according to the position of the center of the content 201 and the deformation information 111. Then, the content deformation unit 103 deforms the content 201 according to the identified shape of the content 201. At this time, a known technique for deforming an image can be used.

Here, note that in the above description, the content 201 is gradually enlarged when it moves from the inner display 22 to the meter display 21, but the present invention is not limited to this, and the content 201 may be first reduced and then enlarged. In addition, the reduction and enlargement may be repeated a plurality of times.

As described above, according to the present embodiment, it is possible to give the user an impression that the content 201 is naturally deformed during the movement of the content 201, thus making it possible to prevent the user from feeling uncomfortable.

### <Fourth Embodiment>

In the first to third embodiments, when the content 201 is moved, the center of the content 201 moves in the horizontal direction. On the other hand, in a fourth embodiment, the moving direction of the content 201 is changed. For example, in the fourth embodiment, the center of the content 201 is also moved in the vertical direction.

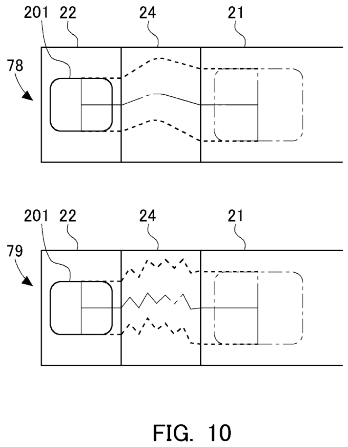

FIG. 10 is a view illustrating an example of the mode of deformation of the content 201 when the content 201 moves on the inner connection display 24 according to the fourth embodiment. FIG. 10 illustrates the meter display 21, the inner display 22, and the inner connection display 24 on the same plane. Reference numeral 78 indicates a mode in which the center of the content 201 moves upward and then moves downward. At reference numeral 78, the loci of the center of the upper side and the center of the lower side of the content 201 are indicated by broken lines. Also, the size of the content 201 displayed on the meter display 21 after its movement is larger than the size of the content 201 displayed on the inner display 22 before its movement. At reference numeral 78, when the content 201 passes through the inner connection display 24, the content 201 moves in the vertical direction while enlarging. The content deformation unit 103 may deform the content 201 so as to be a similar shape, or may deform the content 201 so that the enlargement ratio thereof increases as the content 201 approaches the meter display 21.

Reference numeral 79 indicates a mode in which the center of the content 201 moves in the vertical direction a plurality of times. At reference numeral 79, the loci of the center of the upper side and the center of the lower side of the content 201 are indicated by broken lines. Also, the size of the content 201 displayed on the meter display 21 after its movement is larger than the size of the content 201 displayed on the inner display 22 before its movement. At reference numeral 79, when the content 201 passes through the inner connection display 24, the content 201 moves in the vertical direction while enlarging a plurality of times. The content deformation unit 103 may deform the content 201 so as to be a similar shape, or may deform the content 201 so that the enlargement ratio thereof increases as the content 201 approaches the meter display 21.

Even in this way, when passing through a location where the user may feel uncomfortable while the content 201 is moving, i.e., a curved portion, the content 201 is actively deformed and a plurality of movements are combined, thereby preventing the user from feeling uncomfortable.

### <Other Embodiments>

The above-described embodiments are merely examples, but the present disclosure can be implemented with appropriate modifications without departing from the spirit thereof. The processes and/or means (devices, units, etc.) described in the present disclosure can be freely combined and implemented as long as no technical contradiction occurs. In addition, the processes described as being performed by one device or unit may be shared and performed by a plurality of devices or units. Alternatively, the processes described as being performed by different devices or units may be performed by a single device or unit. In a computer system, it is possible to flexibly change what hardware configuration is used to realize each function.

In the above-mentioned embodiments, examples have been described in which the ECU 10 of the vehicle 1 functions as an information processing apparatus, but the present invention is not limited to this, and for example, a user's mobile terminal may function as an information processing apparatus, or an external server may function as an information processing apparatus.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An in-vehicle system comprising a display device (20) and an information processing apparatus (10) configured to output information via the display device (20),
the display device (20) comprising:
a touch panel (27);
a first display unit (21) disposed in front of a steering wheel (4);
a second display unit (22, 23) disposed on at least one side in a vehicle width direction with respect to the first display unit (21), the second display unit (22, 23) being also disposed on a rear side of a vehicle (1) with respect to the first display unit (21); and
a third display unit connecting the first display unit (21) and the second display unit (22, 23) to each other and having a curved surface;
the information processing apparatus (10) comprising a controller (100) and a storage (110),
the controller (100) being configured to execute:
receiving (S101) a signal from the touch panel (27);
determining (S103), according to information stored in the storage (110), whether or not the signal received from the touch panel (27) is a signal for moving content (201) displayed on one of the first display unit (21) and the second display unit (22, 23) to the other display unit via the third display unit;
identifying (S105) a position of the content (201) in a next frame according to the information stored in the storage (110);
identifying (S107) a shape of the content (201) to be changed corresponding to the position of the content (201) according to the information stored in the storage (110), in response to determining that the signal is a signal for moving the content (201) displayed on the one display unit to the other display unit via the third display unit;
generating (S108) the next frame in which the shape of the content (201) is displayed at the position of the content (201); and
transmitting (S109), to the display device (20), a command to display the next frame thus generated.

2. An in-vehicle system comprising a display device (20) and an information processing apparatus (10) configured to output information via the display device (20),
the display device (20) comprising:
a touch panel (27);
a first display unit (21) disposed in front of a steering wheel (4);
a second display unit (22, 23) disposed on at least one side in a vehicle width direction with respect to the first display unit (21), the second display unit (22, 23) being also disposed on a rear side of a vehicle (1) with respect to the first display unit (21); and
a third display unit connecting the first display unit (21) and the second display unit (22, 23) to each other and having a curved surface;
the information processing apparatus (10) comprising a controller (100) configured to execute:
receiving (S101) a request to move content (201) displayed on one of the first display and the second display to the other display, the request being input to the touch panel (27); and
outputting (S109), to the display device (20), information for moving the content (201) while deforming it, when the content (201) is moved from the one display unit to the other display unit via the third display unit in response to receiving the request, and when the content (201) passes through the third display unit.

3. The in-vehicle system according to claim 2, wherein the controller (100) gradually changes the content (201) from a shape corresponding to the one display unit to a shape corresponding to the other display unit when the content (201) passes through the third display unit.

4. The in-vehicle system according to claim 2, wherein the controller (100) deforms the content (201) by reducing and enlarging the content (201) or distorting the content (201) when the content (201) passes through the third display unit.

5. The in-vehicle system according to claim 2, wherein the controller (100) changes a moving direction of the content (201) a plurality of times when the content (201) passes through the third display unit.

6. The in-vehicle system according to claim 2, wherein the information processing apparatus (10) further comprises a storage (110) configured to store a relationship between a position of the content (201) and a shape of the content (201).

7. The in-vehicle system according to claim 2, wherein the controller (100) obtains the request in response to a user performing a flick or a swipe on the touch panel (27) of the one display unit toward the other display unit.

8. The in-vehicle system according to claim 2, wherein the content (201) includes content (201) related to control of the vehicle (1) or content (201) related to convenience of an occupant of the vehicle (1).

9. An information processing apparatus (10) configured to output information via a display device (20),
the display device (20) comprising:
a touch panel (27);
a first display unit (21) disposed in front of a steering wheel (4);
a second display unit (22, 23) disposed on at least one side in a vehicle width direction with respect to the first display unit (21), the second display unit (22, 23) being also disposed on a rear side of a vehicle (1) with respect to the first display unit (21); and
a third display unit (24, 25) connecting the first display unit (21) and the second display unit (22, 23) to each other and having a curved surface;
the information processing apparatus (10) comprising a controller (100) configured to execute:
receiving (S101) a request to move content (201) displayed on one of the first display and the second display to the other display, the request being input to the touch panel (27); and
outputting (S109), to the display device (20), information for moving the content (201) while deforming it, when the content (201) is moved from the one display unit to the other display unit via the third display unit (24, 25) in response to receiving the request, and when the content (201) passes through the third display unit (24, 25).

10. The information processing apparatus (10) according to claim 9, wherein the controller (100) gradually changes the content (201) from a shape corresponding to the one display unit to a shape corresponding to the other display unit when the content (201) passes through the third display unit (24, 25).

11. The information processing apparatus (10) according to claim 9, wherein the controller (100) deforms the content (201) by reducing and enlarging the content (201) or distorting the content (201) when the content (201) passes through the third display unit (24, 25).

12. The information processing apparatus (10) according to claim 9, wherein the controller (100) changes a moving direction of the content (201) a plurality of times when the content (201) passes through the third display unit (24, 25).

13. The information processing apparatus (10) according to claim 9, further comprising a storage (110) configured to store a relationship between a position of the content (201) and a shape of the content (201).

14. The information processing apparatus (10) according to claim 9, wherein the controller (100) obtains the request in response to a user performing a flick or a swipe on the touch panel (27) of the one display unit toward the other display unit.

15. The information processing apparatus (10) according to claim 9, wherein the content (201) includes content (201) related to control of the vehicle (1) or content (201) related to convenience of an occupant of the vehicle (1).
